Europäisches Patentamt

European Patent Office

Office européen des brevets

(19)

(11) Numéro de publication: **0 092 448**
**B1**

(12) **FASCICULE DE BREVET EUROPEEN**

(45) Date de publication du fascicule du brevet: **07.01.87**

(21) Numéro de dépôt: **83400452.5**

(22) Date de dépôt: **04.03.83**

(51) Int. Cl.⁴: **F 24 F 3/16,** B 60 H 1/00,
B 60 H 1/26

(54) **Pressuriseurs-conditionneurs d'air notamment pour cabines de travail en atmosphère polluée.**

(30) Priorité: **05.03.82 FR 8203663**

(43) Date de publication de la demande:
**26.10.83 Bulletin 83/43**

(45) Mention de la délivrance du brevet:
**07.01.87 Bulletin 87/02**

(84) Etats contractants désignés:
**AT BE CH DE IT LI LU NL SE**

(56) Documents cités:
**EP-A-0 034 096**
**DE-A-2 243 071**
**DE-A-2 360 153**
**US-A-3 524 398**

(73) Titulaire: **Société SODICEP (S.a.r.l.)**
**11bis rue Chevalier**
**F-94210 La Varenne St Hilaire (FR)**

(72) Inventeur: **Mattei née Loubet, Eliane Michèle**
**11bis rue Chevalier**
**F-94210 La Varenne st Hilaire (FR)**

(74) Mandataire: **Viard, Jean**
**Cabinet VIARD 28 bis, avenue Mozart**
**F-75016 Paris (FR)**

Courier Press, Leamington Spa, England.

## Description

L'invention concerne un pressuriseur-conditionneur d'air pour cabines de travail en atmosphère polluée.

L'invention concerne plus spécialement la protection indispensable des personnes contre des produits solides, liquides ou gazeux, que l'on rencontre dans les travaux agricoles, en particulier les produits de traitement des sols ou des cultures.

Il convient, avant d'aborder les dispositions principales de l'invention, de rappeler les difficultés rencontrées à l'occasion de l'utilisation des appareils de filtrage, adaptables ou incorporables aux cabines de travail en atmosphère polluée.

Le brevet US—A—3 524 398 (Winfrey) décrit un appareil climatiseur à évaporation d'eau comprenant un pressuriseur-conditionneur d'air pour cabines de travail, notamment les cabines de conduite de tracteurs agricoles, appareil comprenant un bloc de traitement de l'air monté sur/ou incorporé au toit d'une cabine, ce bloc étant équipé intérieurement d'au moins un élément de filtration grossière et un élément de filtration fine, et d'un groupe turbo-ventilateur pour aspirer l'air extérieur et le conduire à la cabine utilisatrice, le bloc de traitement de l'air se présentant sous la forme générale d'un bac parallélépipédique possédant sur l'une de ses faces frontales une ouverture d'aspiration s'étendant sur la plus grande partie de cette face pour donner accès à la face frontale de l'élément de filtration, les éléments de filtration étant accolés mécaniquement et sans fuite sur un cadre étanche intermédiaire; le groupe turbo-ventilateur étant disposé à l'intérieur du bac en aval de l'élément de filtration pour que l'air traverse par aspiration l'élément filtrant et soit refoulé, épuré, dans la cabine d'utilisation au travers d'un diffuseur. Il s'agit, dans ce brevet d'un dispositif destiné à rendre plus confortable le travail dans une cabine de tracteur.

L'objet du document DE—A—2 243 071 (Environment/One Corp.) est relatif à un dispositif fixe de filtration et est destiné à filtrer l'air d'une habitation, ce qui pose un problème différent de celui du travail mobile en atmosphère polluée.

Dans ce type d'appareil, le moto-ventilateur est placé sur l'une des parois extérieures de l'enceinte et aspire l'air extérieur au travers d'une ouverture dont la surface d'admission correspond sensiblement à la surface de travail active des pales du ventilateur, ce qui pose des difficultés lorsque l'on cherche à pressuriser la cabine équipée de ce genre d'appareils. On a remarqué en effet qu'un débit d'air d'environ 600 m3/h était indispensable pour obtenir une pressurisation convenable d'une cabine de véhicule tracteur. Si l'on n'atteint pas un débit de cet ordre, une certaine quantité de poussières et d'agents polluants reste en cabine et la sécurité de l'occupant n'est pas assurée.

Une autre difficulté de ce genre d'appareils connu est le rapide colmatage des éléments filtrants et surtout leur neutralisation rapide lorsque l'engin travaille dans une atmosphère chargée de particules liquides (pulvérisation de solutions aqueuses) auquel cas le brouillard ambiant, formé par la pulvérisation est aspiré par le moto-ventilateur et pulsé sur le filtre mécanique, le traverse, toujours chargé d'humidité et de produits toxiques et atteint le filtre chimique qui, très rapidement, perd son pouvoir absorbant dès qu'il s'imprègne d'humidité.

La présente invention a en conséquence pour but de remédier à ces difficultés en fournissant un appareil de pressurisation et d'épuration d'air qui présente une fonction de pressurisation plus efficace de nature à empêcher toute pénétration d'air pollué en cabine.

Un autre but de l'invention est de fournir un appareil qui assure une épuration plus poussée et dont la durée d'efficacité est augmentée, d'une part en retardant le colmatage des éléments filtrants, d'autre part, en éliminant, avant filtration, la majorité des particules liquides pouvant être contenues dans l'atmosphère extérieure.

Un autre but encore est de doter un tel appareil de moyens de contrôle combinés indiquant à tout moment le degré d'efficacité du fonctionnement du pressuriseur-conditionneur d'air qui équipe la cabine de travail ou de conduite. Il convient de rappeler que les appareils pressuriseurs sont équipés d'un préfiltre, d'au moins un filtre physique et d'un filtre chimique, l'air de pressurisation est fourni par un turbo-ventilateur à débit réglable qui alimente en air pulsé la cabine d'utilisation.

Il est apparu dans des appareils pressurisateurs-conditionneurs d'air que l'efficacité de la filtration est fonction de plusieurs facteurs dont deux essentiels. Ces deux facteurs sont: d'une part, la différence de pression relative régnant entre le milieu extérieur à la cabine et son milieu intérieur. Le milieu extérieur est le milieu où règne un taux de nocivité important (pulvérisation, saupoudrage), le milieu intérieur étant le milieu que l'on veut protéger. Cette différence de pression est assurée par une mise en pression (ou pressurisation) de la cabine grâce au moto-ventilateur de l'appareil. L'écart de pression peut être faible, de l'ordre de 1 à quelques millimètres d'eau. Cette légère surpression fera barrière à l'entrée des produits nocifs à l'intérieur de la cabine. D'autre part, l'état des filtres (préfiltre, filtre physique et filtre chimique). Trois phénomènes peuvent affecter l'efficacité de la filtration, à savoir: le colmatage des filtres physiques: le rôle principal du préfiltre et du filtre physique est d'assurer une retenue physique des particules en suspension dans l'air. En effet, ces particules sont le support primordial des vapeurs et produits nocifs. Il est donc compréhensible qu'en jouant leur rôle, ces filtres vont se charger en particules et, au fur et à mesure, se colmater. Le colmatage induit d'ailleurs un autre effet; les filtres, surchargés de particules, commencent à les relâcher et ces particules pénètrent à l'intérieur de la cabine. L'efficacité de la filtration est alors nulle;

**0 092 448**

—la saturation du filtre chimique: le filtre chimique constitué de charbons actifs et d'un support a pour propriété de retenir les constituants organiques des vapeurs et aérosols nocifs grâce au phénomène d'adsorbtion. Néanmoins, la capacité de rétention en poids moléculaire de ces agents chimiques est limitée et proportionnelle au poids de charbons actifs. Le pouvoir de rétention de la cellule se situe entre 260 et 350 grammes. Au delà, le pouvoir chute rapidement et la filtration chimique devient pratiquement nulle.

Il est donc important de connaître en permanence, pour des appareils du genre en question, l'état de ce filtre chimique, l'état du ou des filtres mécaniques, mais aussi connaître et régler le débit d'air en fonction du pouvoir filtrant des filtres tout en maintenant le minimum nécessaire de pressurisation dans la cabine.

Pour atteindre ces buts, l'invention concerne un pressuriseur-conditionneur d'air pour cabines de travail en atmosphère polluée, notamment les cabines de tracteurs agricoles, appareil comprenant un bloc de traitement de l'air monté sur/ou incorporé au toit d'une cabine, ce bloc étant équipé intérieurement d'un élément de filtration grossière pour l'élimination des solides tels que feuilles d'arbres, gravillons d'un élément de filtration fine de dépoussiérage et d'un groupe turbo-ventilateur pour aspirer l'air extérieur et le conduire filtré et épuré à la cabine utilisatrice, le bloc de traitement de l'air se présentant sous la forme générale d'un bac parallélépipédique possédant sur l'une de ses faces frontales une ouverture d'aspiration s'étendant sur la plus grande partie de cette face pour donner accès la face frontale des éléments de filtration, les éléments de filtration étant accolés mécaniquement et sans fuite sur un cadre étanche intermédiaire, le groupe turbo-ventilateur étant disposé à l'intérieur du bac en aval de l'élément de filtration pour que l'air traverse par aspiration l'élément filtrant et soit refoulé, épuré, dans la cabine d'utilisation au travers d'un diffuseur, caractérisé en ce que le bloc de traitement de l'air comprend en plus une cellule à charbons actifs pour arrêter par absorption les gaz et vapeurs nocifs, et en ce que un équipement de contrôle de pressurisation et un détecteur de toxicité de l'air pulsé en cabine sont prevus, l'équipement de contrôle de pressurisation et de toxicité comprenant, d'une part, un pressostat différentiel possédant une prise de pression en cabine et une prise de pression hors cabine, ce pressostat alimentant en cabine un témoin de pressurisation, et d'autre part, un compteur d'impulsions associé à un pont diviseur comprenant autant de rapports que le groupe turbo-ventilateur possède d'allures de débit, ce compteur affichant, en temps corrigé, le temps d'utilisation efficace du cellule à charbons actifs en fonction des allures de débit du turbo-ventilateur, d'autre part encore, le détecteur de toxicité comprenant, sur un support remplaçable situé sur le trajet de l'air pulsé en cabine, plusieurs pastilles de réactif révélant, par changement de couleur, à partir d'un certain seuil, la présence de corps chimiques polluants.

La conception de l'appareil est telle que les écoulements d'air sont obligés de traverser les filtres et que nulle fuite ne peut exister. En effet, dans le sens aspiration-refoulement, on trouve en amont le filtre physique plaqué naturellement par l'aspiration de l'air sur un cadre étanche intermédiaire sur lequel vient s'accoler, en aval, à l'aide de deux tirants et d'un mécanisme de poussée, la cellule chimique. Le filtre et la cellule comportent sur leur face en contact avec le cadre étanche intermédiaire un joint d'étanchéité. De cette façon, l'air aspiré de l'extérieur, une fois le filtre physique passé, est obligé de traverser, sans fuite possible, le cadre étanche intermédiaire et la cellule où le traitement chimique s'opère. L'air est ensuite aspiré par le ventilateur et refoulé à l'intérieur de la cabine, d'autre part encore, le pressuriseur est doté d'un équipement de contrôle de pressurisation, d'un compteur d'utilisation du filtre chimique et d'un détecteur de toxicité de l'air pulsé en cabine.

Grâce à l'équipement de contrôle de pressurisation, l'occupant d'une cabine connaît à tout moment l'état de pressurisation et par suite l'état de colmatage des filtres mécaniques ou les pertes anormales de pression dues à des fuites accidentelles. Grâce au compteur d'utilisation du filtre chimique, il connait la durée de son efficacité. Enfin, grâce au détecteur de toxicité, il détecte une éventuelle toxicité de l'air pulsé en cabine. L'utilisateur peut à tout moment, grâce au contrôle de pressurisation conjugué au compteur d'utilisation du filtre chimique, en fonction du degré de pollution extérieure, choisir la vitesse du débit d'air la plus économique et la plus appropriée pour assurer le fonctionnement efficace du pressuriseur-conditionneur d'air.

Suivant une autre caractéristique, le témoin de pressurisation, le compteur d'utilisation du filtre chimique et le détecteur de toxicité sont regroupés de préférence en cabine sur le diffuseur du pressuriseur-conditionneur d'air, tandis que le détecteur de toxicité se présente sous forme d'une carte enfichable dans un porte-carte exposé au courant d'air circulant dans le diffuseur de l'appareil pressuriseur-conditionneur d'air, ladite carte comprenant de préférence une pastille détectant la présence d'insecticides phosphorés, une pastille détectant la présence d'insecticides et herbicides chlorés, une pastille détectant la présence d'herbicides nitrés et une pastille détectant la présence de fongicides. D'autres types de pastilles pourraient compléter le présent dispositif.

D'autres caractéristiques et avantages apparaitront encore à la lecture de la description détaillée qui suit d'un mode d'exécution de l'invention donné ici à titre d'exemple et montré dans les dessins joints dans lesquels:

—la Fig. 1 est une vue schématique, en perspective, avec parties arrachées montrant les principaux éléments constitutifs de l'appareil,

—la Fig. 2 est une vue plus complète de l'appareil montrant en éclaté les composants fonctionnels,

—la Fig. 3 est une vue en plan d'un détecteur de toxicité,

3

— la Fig. 4 est une vue en coupe transversale selon 3—3 de la Fig. 2 montrant le détecteur de toxicité en place sur le diffuseur d'air de l'appareil,
— la Fig. 5 est un schéma électrique de l'équipement de contrôle.

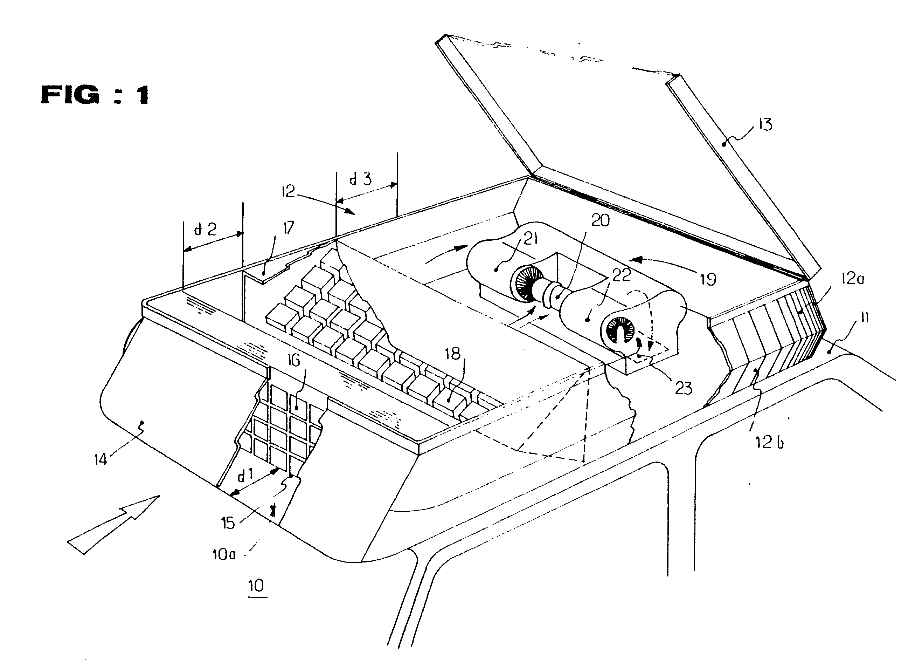

Ainsi que montré dans la Fig. 1, le pressuriseur-condtionneur d'air est désigné par la référence générale 10. Dans cet exemple, le bloc de traitement de l'air, ou bac 12, est muni d'un couvercle amovible 13, donnant accès à tous les composants de l'appareil.

Le bloc de traitement est disposé ici sur le toit de la cabine 11, d'un véhicule tracteur. Ce toit est percé de deux orifices pour le passage de l'air filtré dans la cabine du véhicule. Ce même bloc, dans une deuxième version, peut être livré sous forme de plateau pour intégration dans le toit de la cabine.

Le bloc de traitement de l'air se présente sous la forme générale d'un bac parallélépipédique dont l'une des faces frontales présente une ouverture d'aspiration 10a qui s'étend sur la plus grande partie de cette face, pour donner accès à la face frontale d'un premier élément 15 de filtration grossière, qui se présente sous la forme d'une grille permettant d'éliminer les grosses particules, lesquelles colmateraient très rapidement l'élément 16 de filtration fine. L'élément de filtration fine 16 est constitué préférablement d'un média spécial à fibres synthétiques ignifugées, entrelacées et solidarisées par un liant ignifuge.

Dans une deuxième version de l'appareil et dans le but de compléter l'action anticolmatage de la grille 15, il est prévu en amont de l'ouverture frontale des filtres 15—16, un déflecteur-filtre 14, en forme de visière, abritant les surfaces filtrantes 15 et 16. Le déflecteur 14 délimite avec la face frontale de l'ouverture d'aspiration, une première chambre $d1$ de tranquillisation de l'air aspiré. On comprend que par cette disposition, les plus grosses particules solides ou liquides n'atteignent pas le plan de grille 15.

Suivant un mode d'exécution, on constitue le déflecteur-filtre 14 en matériau fritté, de préférence métallique, et présentant une structure poreuse. On a découvert, d'une manière surprenante, que le déflecteur-filtre en matière frittée apportait des améliorations considérables sur la fonction de filtration. Le déflecteur en matériau fritté assure la fonction de préfiltre s'il est disposé, comme montré au dessin, en amont des filtres secs 15 et 16. Dans ces conditions, la densité de frittage sera comprise de préférence entre 50 et 200 µm, compte tenu du débit d'air de l'appareil qui peut atteindre 800 m3/h.

Il va de soi qu'un écran en matériau fritté pourrait également être disposé en aval des filtres secs 15 et 16, pour assurer une filtration fine, auquel cas la densité du frittage peut être de l'ordre de 2 à 25 µm.

La présence du déflecteur-filtre 14 a pour conséquence également une amélioration du traitement chimique de l'air. Cette amélioration est due aux deux propriétés suivantes du matériau fritté: tout d'abord, le matériau fritté du déflecteur-filtre assure la séparation de tout liquide en suspension dans un gaz, c'est par exemple le cas des vaporisations sous pression de liquide. La vapeur d'eau, au contact du matériau fritté, a une tension superficielle très différente de celle du gaz. Le matériau fritté sera "mouillé" par l'eau, alors que les gaz pourront traverser cette barrière. L'eau sera recueillie ou évacuée sur la face avant du déflecteur 14. Les gaz traversant le déflecteur seront d'autant mieux traités par la cellule de filtration à charbons actifs qui sera décrite plus en détail par la suite, que ces gaz seront secs et non humides, car on a observé que la vapeur d'eau sature très rapidement les charbons actifs.

En outre, la présence du déflecteur filtre 14 permet d'obtenir une séparation sélective des gaz. Contrairement à l'azote et l'oxygène, constituants de l'air, les gaz lourds (constituants chlorés, halogénés, etc.) que l'on rencontre notamment dans les pesticides, ont un pouvoir mouillant important et seront en conséquence en partie arrêtés par le matériau fritté. Ces gaz lourds seront d'autant plus retenus par le matériau fritté que celui-ci présente une affinité avec de tels composants. Bien entendu, on peut utiliser des matériaux métalliques frittés tels que par exemple du bronze, de l'inox, du titane, du nickel, de l'aluminium, etc.

Suivant une autre disposition importante de l'invention la cellule d'assainissement 17 de l'air, à charbons actifs, se présente sous la forme d'un caisson amovible, disposé en aval de l'élément 16 de filtration fine, à une certaine distance de cet élément, pour former un seconde chambre de tranquillisation désignée par la référence $d2$. Le caisson 17 contient un matelas alvéolé 18 dans lequel est enfermé le charbon actif. Le matelas 18 est plié en deux et fixé dans la cellule sous la forme d'un V couché sur l'horizontale de manière à présenter un bord d'attaque étroit, dirigé vers l'élément 16 de filtration fine, et deux bords de fuite divergents, dirigés vers le groupe turbo-ventilateur 19. Il est prévu entre la cellule de filtration à charbons actifs et le groupe moto-ventilateur 19 une chambre de tranquillisation $d3$, ce qui contribue à assurer un débit d'air à flux le plus laminaire possible sur toute la longueur du parcours emprunté par l'air traité dans l'appareil.

Suivant une autre disposition importante de l'invention, le groupe turbo-ventilateur 19 est disposé à l'intérieur du bac 12, en aval des différents éléments de filtration, de sorte que l'air à filtrer et à épurer passe successivement par aspiration au travers du déflecteur-filtre 14, des éléments de filtration grossière et fine 15—16, de la cellule 17 à charbons actifs 18 et enfin au travers du groupe turbo-ventilateur 19 qui alimente directement en air plusé la cabine d'utilisation 11.

Le groupe turbo-ventilateur 19 est constitué de deux turbines aspirantes soufflantes 21—22, à axe de rotation horizontal. Ces turbines sont entraînées par un moteur électrique commun 20, disposé entre les deux corps de turbines. Chaque corps de turbine possède deux entrées d'air symétriques, disposées respectivement à chaque extrémité du corps de turbine, les deux corps de turbine 21—22 étant à chaque fois reliés à un collecteur-distributeur 23, communiquant avec la cabine utilisatrice, au travers des orifices prévus à cet effet dans le toit de la cabine 11.

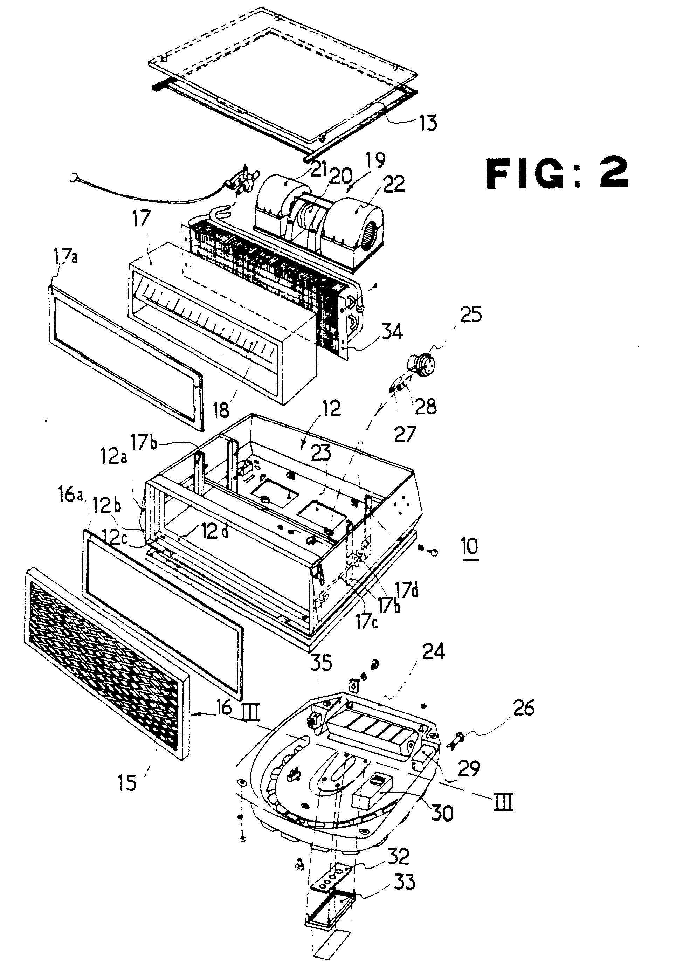

L'appareil est complété par un diffuseur 24 d'air traité disposé dans la cabine 11 et alimenté par le groupe turbo-ventilateur. Ce diffuseur est montré en détail dans la Fig. 2.

Dans ce type d'appareil, il est important d'assurer une très bonne étanchéité entre les différents filtres afin d'être sûr que la totalité de l'air à filtrer passe au travers des éléments filtrants.

Pour obtenir cette étanchéité, il est prévu, à l'entrée du caisson 12 un premier cadre 12c ouvert sur l'avant qui reçoit à emboîtement les filtres mécaniques 15—16 avec interposition d'un joint d'étanchéité 16a. Le groupe turbo-ventilateur 19 créant une dépression sur la face arrière du filtre mécanique 16, il se produit une force d'appui sur ladite face arrière du filtre, le joint 16a et le cadre 12c. L'étanchéite entre la cellule 17 à charbons actifs est obtenue par rapport à un cadre d'appui stationnaire 12d avec interposition d'un joint 17a, l'ensemble cellule et joint étant maintenu à serrage contre le cadre 12d à l'aide d'une paire de brides 17b, une paire de tirants filetés 17c et des écrous de serrage 17d. Les filtres mécanique et chimique peuvent être complétés par un échangeur de chaleur 34, par exemple un radiateur de chauffage en soi connu. Un interrupteur général 31, à trois positions et arrêt, autorise la commande de mise en fonctionnement de l'appareil selon l'une quelconque des trois allures de débit d'air du groupe turbo-ventilateur.

Enfin, suivant un mode d'exécution préféré, les parois latérales du bac sont en forme de déflecteur convexe. Cette solution de construction permet d'une part d'agrandir le volume du bac de traitement de l'air, et d'autre part, de constituer pour chacune de ces parois latérales un déflecteur mécanique, notamment pour les branches d'arbres qui pourraient se trouver sur le trajet du véhicule tracteur. Les parois latérales du bac sont de préférence formées de deux plans convergents 12a, 12b, réunis à leur sommet par une arête qui s'étend sur toute la longueur desdites parois latérales.

Avec un appareil du genre décrit, on obtient une ventilation surpuissante pouvant délivrer de 450 à 800 m3/h. A la vitesse nominale de 600 m3/h, l'appareil permet de renouveler l'air d'une cabine de 3 $m^3$ en moins de 20 secondes, ce qui donne plus de trois renouvellements d'air par minute. Il est évident que les cabines équipées de l'appareil pressuriseur devront être suffisamment étanches pour éviter une chute de la pressurisation intérieure. Avantageusement, le turbo ventilateur est à trois vitesses de ventilation, étagées par exemple de 2300 tours/minute à 3700 tours/minute.

Un mode de décolmatage des filtres peut être avantageusement utilisé, en inversant simplement le sens habituel du flux de circulation qui, dans ce cas, est aspiré dans la cabine, puis plusé au travers du matelas de la cellule 17 et au travers du filtre sec 16. Ce mode de décolmatage est particulièrement avantageux car les particules retenues tant par le matelas de la cellule que par le filtre sec, n'ont plus à migrer au travers de la totalité de l'épaisseur de ces filtres, mais ont seulement un faible parcours à effectuer pour être rejetées à l'extérieur au travers de l'ouverture d'aspiration.

Dans l'exemple d'exécution de la Fig. 2, le pressuriseur-conditionneur d'air 10 comporte un diffuseur d'air traité 24 disposé en cabine alimenté par le groupe turbo-ventilateur 19. Sur le diffuseur 24 sont regroupés les différents organes de contrôle de fonction du pressuriseur conditionneur d'air. L'équipement de contrôle comporte tout d'abord un pressostat différentiel 25 dont le seuil est de 3 millimètres de colonne d'eau à l'enclenchement et de 2 millimètres de colonne d'eau au déclenchement. Cela signifie qu'il sera indispensable, à la mise en route, d'assurer une pressurisation d'au moins 3 mm de colonne d'eau dans la cabine d'utilisation 11 pour que le pressostat 25 déclenche. Dans ce cas, le pressostat 25 alimente un témoin de fonctionnement 26 qui, lorsqu'il sera allumé sera le signe d'une présence de pressurisation d'au moins 2 mm de colonne d'eau dans la cabine d'utilisation. La prise de pression différentielle s'effectue d'une part par un conduit 27 dont l'ouverture débouche à l'extérieur du caisson 12 de l'appareil pressuriseur-conditionneur d'air, d'autre part par un conduit 28 dont l'orifice débouche dans la cabine de travail. Grâce à cette première disposition, on peut relever en cabine les défaillances de la pressurisation. Ces défaillances peuvent être dues soit au colmatage des filtres 16—17, ce qui se traduit par une insuffisance de débit d'air; il suffit alors de nettoyer les filtres physiques et de remplacer s'il y a lieu le filtre chimique; soit l'étanchéité de la cabine est défaillante auquel cas il suffira d'en améliorer le calfeutrage. L'équipement comporte par ailleurs un compteur d'impulsions 29 permettant de contrôler le volume d'air débité par l'appareil. Le compteur 29 est un compteur d'impulsions dont la base de temps est fournie par une bobine ou un quartz. A ce compteur est associé un diviseur électronique 30, dans l'exemple représenté à trois rapports correspondant aux trois positions du commutateur 31 du turbo-ventilateur 19. Les débits d'air correspondant aux trois vitesses de ventilation ont été relevés de manière à donner au pont diviseur 30 le ratio des débits d'air. Le tableau ci-dessous indique un choix préféré des ratios utilisés:

| Vitesse | Débit d'air moyen | Ratio du diviseur |
|---------|-------------------|-------------------|
| 1 | 210 m³/h | 1 |
| 2 | 140 m³/h | 0,7 |
| 3 | 100 m³/h | 0,5 |

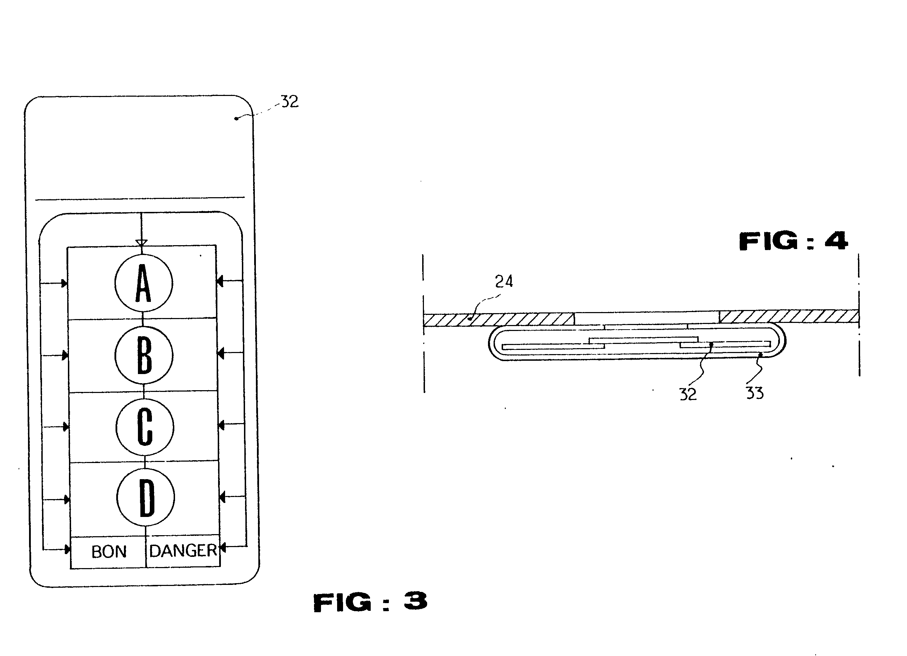

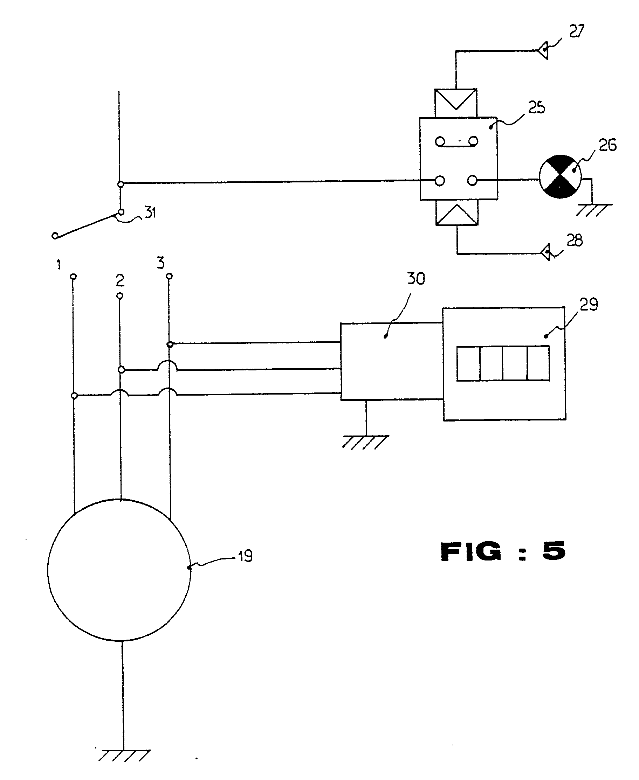

Lors des essais d'endurance du pressuriseur-conditionneur d'air, le temps ou le seuil de toxicité a été relevé. Les temps étant connus pour les trois vitesses du turbo-ventilateur 19, le pont diviseur 30 permet d'afficher sur le compteur 29 un temps corrigé en fonction des allures de débit du turbo-ventilateur. Ce dispositif permet à tout moment de connaître l'état de la cellule à charbon actif 17. Le compteur de temps d'utilisation de la cellule de filtration chimique et le témoin de pressurisation de la cabine sont avantageusement complétés par un détecteur de toxicité 32 se présentant·sous forme d'une carte enfichable dans un porte carte 33 exposé au courant d'air circulant dans le diffuseur 24 de l'appareil pressuriseur conditionneur d'air. La carte enfichable 32 comporte des pastilles de réactif respectivement A, B, C, D, réagissant par changement de couleur à l'ensemble des produits utilisés pour le traitement des cultures (Figs. 3 et 4).

Le détecteur de toxicité s'est révélé particulièrement utile car dans certains cas, pour différentes causes, le taux de toxicité peut être dépassé en cabine sans que pour autant les temps de maintenance des filtres soient atteints. Ces causes sont multiples et l'on peut citer par exemple: erreur dans le dosage du traitement effectué, conditions atmosphériques difficiles, accident de cabine (pressurisation non assurée). Dans tous ces cas, le niveau de toxicité peut être donc atteint en cabine sans que pour autant l'occupant s'en rende compte. Le détecteur de toxicité a donc pour rôle d'indiquer les dépassements de seuil normalisé, notamment les normes OSHA. Le tableau ci-dessous résume les produits auxquels réagissent ces pastilles:

| Pastille | Réactif | Taux | Pesticide |
|---|---|---|---|
| A | ammoniaque | 25 ppm | insecticides phosphorés |
| B | chlore | 1 ppm | insecticides et .herbicides |
| C | hydracide | 1 ppm | herbicides nitrés |
| D | hydrogène sulfuré | 5 ppm | fongicides |

La détection du dispositif est continue. La pastille commencera à changer de teinte dès que le taux de toxicité du tableau sera atteint. Cette teinte s'accentuera pour virer au foncé si aucune mesure n'est prise. Dans l'exemple choisi, il a été nécessaire de prévoir·quatre pastilles car si l'une de celles-ci est sensible au produit réactif choisi elle est par contre indifférente à la nature de tout autre produit. Par exemple, une pastille dont le réactif est le chlore ne changera pas de couleur si elle est parcourue par de l'ammoniaque. Le détecteur de toxicité porte sur la carte 32 la couleur d'origine (neutre) et la couleur à laquelle virera celle-ci lorsqu'elle sera soumise au réactif. Ces mentions permettent de visualiser à tout moment le début d'un changement de teinte parfois difficile à cerner. Le code des couleurs est le suivant:

| Pastille | Couleur d'origine | Couleur au seuil de toxicité |
|---|---|---|
| A | jaune | bleu |
| B | blanc | jaune |
| C | blanc | jaune |
| D | blanc | brun |

La carte 32 ou réglette sera changée dès que l'une des pastilles aura viré de teinte.

**Revendications**

1. Pressuriseur-conditionneur d'air pour cabines de travail en atmosphère polluée, notamment les cabines de tracteurs agricoles, appareil comprenant un bloc de traitement de l'air (12) monté sur/ou incorporé au toit d'une cabine (11) ce bloc étant équipé intérieurement d'un élément de filtration grossière (15) pour l'élimination des solides tels que feuilles d'arbres, gravillons, d'un élément de filtration fine (16) de dépoussiérage et d'un groupe turbo-ventilateur (19) pour aspirer l'air extérieur et le conduire filtré et épuré à la cabine utilisatrice, le bloc de traitement de l'air (12) se présentant sous la forme générale d'un bac parallélépipédique possédant sur l'une de ses faces frontales une ouverture d'aspiration (10a) s'étendant sur la plus grande partie de cette face pour donner accès à la face frontale des éléments de filtration, les éléments de filtration étant accolés mécaniquement et sans fuite sur un cadre étanche intermédiaire, le groupe turbo-ventilateur (19) étant disposé à l'intérieur du bac en aval de l'élément de filtration pour que l'air traverse par aspiration l'élément filtrant et soit refoulé, épuré, dans la cabine d'utilisation au travers d'un diffuseur (24), caractérisé en ce que le bloc de traitement de l'air (12) comprend en plus une cellule (17) à charbons actifs pour arrêter par absorption les gaz et vapeurs nocifs, et en ce que un équipement de contrôle de pressurisation et un détecteur de toxicité (32) de l'air pulsé en cabine sont prévus, l'équipement de contrôle de pressurisation et de toxicité comprenant, d'une part, un pressostat différentiel (25) possédant une prise de pression (28) en cabine et une prise de pression (27) hors cabine, ce pressostat alimentant en cabine un témoin de pressurisation (26), et d'autre part, un compteur d'impulsions (29) associé à un pont diviseur (30) comprenant autant de rapports que le groupe turbo-ventilateur (19) possède d'allures de débit, ce compteur affichant, en temps corrigé, le temps d'utilisation efficace de la cellule à charbons actifs (17) en fonction des allures de débit du turbo-ventilateur (19); d'autre part encore, le détecteur de toxicité (32) comprenant, sur un support remplaçable situé sur le trajet de l'air pulsé en cabine, plusieurs pastilles (A, B, C, D) de réactif révélant, par changement de couleur, à partir d'un certain seuil, la présence de corps chimiques polluants.

2. Pressuriseur-conditionneur d'air selon la revendication 1, caractérisé en ce qu'il est prévu d'une part, en amont de l'ouverture d'aspiration (10a) pour l'entrée d'air un déflecteur-filtre (14) séparant les liquides en suspension dans un gaz, ce déflecteur délimitant avec la face frontale de l'élément de filtration grossière (15) une première chambre de tranquillisation (d1) de l'air aspiré, d'autre part en ce que la cellule à charbons actifs (17) est disposée à une certaine distance de l'élément de filtration fine (16) pour former une seconde chambre de tranquillisation (d2); d'autre part encore, en ce que le groupe turbo-ventilateur (19) est également disposé à une certaine distance de la cellule à charbons actifs (17) pour former une troisième chambre de tranquillisation (d3).

3. Pressuriseur-conditionneur d'air selon la revendication 1, caractérisé en ce que la cellule (17) à charbons actifs, se présente sous la forme d'un caisson amovible, ce caisson contenant un matelas alvéolé (18) dans lequel est enfermé le charbon actif, ce matelas ayant la forme d'un V couché sur l'horizontale de manière à présenter un bord d'attaque étroit dirigé vers l'élément (16) de filtration fine et deux bords de fuite divergents dirigés vers le groupe turbo-ventilateur (19).

4. Pressuriseur-conditionneur d'air selon la revendication 1, caractérisé en ce que le témoin de pressurisation (26), le compteur d'utilisation (29) du filtre chimique (17) et le détecteur de toxicité (32) sont regroupés en cabine sur le diffuseur (24) du pressuriseur-conditionneur d'air et en ce que le pressostat (25) est couplé à un commutateur (31) commandant les différentes allures de débit du groupe turbo-ventilateur (19).

5. Pressuriseur-conditionneur d'air selon la revendication 1, caractérisé en ce que le détecteur de toxicité (32) se présente sous forme d'une carte enfichable dans un porte-carte (33) exposé au courant d'air circulant dans le diffuseur (24) de l'appareil pressuriseur-conditionneur d'air, ladite carte comprenant de préférence une pastille ammoniaque (A) détectant la présence d'insecticides phosphorés, une pastille chlore (B) détectant la présence d'insecticides et herbicides chlores, une pastille hydracide (C) détectant la présence d'herbicides nitrés et une pastille hydrogène (D) détectant la présence de fongicides.

6. Pressuriseur-conditionneur d'air selon la revendication 1, caractérisé en ce que le bac du bloc de traitement de l'air (12) a des parois latérales en forme de déflecteur convexe, de préférence formé de deux plans convergents (12a, 12b) réunis à leur sommet par une arête.

**Patentansprüche**

1. Uberdruck-Klimaanlage für Arbeitskabinen in verunreinigter Umgebungsluft, insbesondere für Kabinen von Ackerschleppern, mit einem Luftbehandlungsblock (12), der auf dem Dach einer Kabine (11) angeordnet oder in das Dach einer Kabine (11) eingebaut ist und der innen mit einem Grobfilterelement (15) zum Abscheiden von Feststoffen, wie Laub und Split, mit einem Feinfilterelement (16) für das Entstauben und mit einer Turbo-Ventilatorgruppe (19) versehen ist, um die Außenluft anzusaugen und sie gefiltert und gereinigt in die Benutzerkabine zu leiten, wobei der Luftbehandlungsblock (12) die allgemeine Form eines parallelepipedischen Behälters hat, der in einer seiner Vorderflächen eine Saugöffnung (10a) besitzt, die sich über den größten Teil dieser Fläche erstreckt, um Zugang zu der Vorderfläche der Filterelemente zu gewähren, welche mechanisch und ohne Leck mit einem dichten Zwischenrahmen eingefaßt sind, wobei die Turbo-Ventilatorgruppe (19) im Inneren des Behälters stromab von dem Filterelement angeordnet ist, damit die Luft durch Ansaugen das Filterelement durchdringt und gereinigt in die Benutzungskabine durch einen Diffusor (24) hindurchgefördert wird, dadurch gekennzeichnet, daß der Luftbehandlungsblock (12) zusätzlich eine Aktivkohlenzelle (17) enthält, um durch Absorption schädliche Gase und Dämpfe aufzuhalten, und daß eine Einrichtung zum Kontrollieren des Druckes und ein Giftdetektor (32) für die in Kabine geförderte Luft vorgesehen sind, wobei die Einrichtung zum Kontrollieren des Uberdruckes und der Giftigkeit einerseits einen einen Druckaufnehmer (28) in der Kabine und einen Druckaufnehmer (27) außerhalb der Kabine besitzenden Differentialdruckgeber (25) enthält, der in der Kabine einen Druckwächter (26) versorgt und andererseits einen Impulszähler (29), der mit einem Brückenteiler (30) verbunden ist, der soviele Durchgriffe enthält, wie die Turbo-Ventilator-gruppe (19) Leistungsstufen besitzt, wobei der Zähler in korrigierter Zeit die effektive Benutzungszeit der Aktivkohlenzelle (17) in Abhängigkeit von den Leistungsstufen des Turbo-Ventilators anzeigt, wobei außerdem noch der Giftdetektor (32) auf einem austauschbaren, im Strom der in die Kabine geförderten Luft angeordneten Halter mehrere Pastillen (A, B, C, D) eines Reagenz enthält, die durch Farbänderung ab einer bestimmten Schwelle die Anwesenheit von verunreinigenden chemischen Substanzen anzeigen.

2. Überdruck-Klimaanlage nach Anspruch 1, dadurch gekennzeichnet, daß einerseits stromauf von der Ansaugöffnung (10a) für den Eintritt der Luft ein Umlenkungsfilter (14) angeordnet ist, der die in einem Gas suspendierten Flüssigkeiten abscheidet und der mit der Vorderfläche des Grobfilterelementes (15) eine erste Beruhigungskammer (d1) für die angesaugte Luft begrenzt, und daß andererseits die Aktivkohlenzelle (17) in einem gewissen Abstand von dem Feinfilterelement (16) angeordnet ist, um eine zweite Beruhigungskammer (d2) zu bilden, und daß außerdem die Turbo-Ventilatorgruppe (19) ebenso in einem gewissen Abstand von der Aktivkohlenzelle (17) angeordnet ist, um eine dritte Beruhigungskammer (d3) zu bilden.

3. Überdruck-Klimaanlage nach Anspruch 1, dadurch gekennzeichnet, daß die Aktivkohlenzelle (17) die Form einer auswechselbaren Kassette hat, die ein wabenförmiges Polster enthält, in welchem die Aktivkohle eingeschlossen ist, wobei das Kissen die Form eines derart horizontal liegenden V aufweist, um einen schmalen, zu dem Feinfilterelement (16) gerichteten Angriffsrand und zwei divergierende Austrittskanten zu bilden, die zur Turbo-Ventilatorgruppe (19) gerichtet sind.

4. Überdruck-Klimaanlage nach Anspruch 1, dadurch gekennzeichnet, daß der Druckwächter (26), der Gebrauchszähler (29) des chemischen Filters (17) und der Giftdetektor (32) in der Kabine an dem Diffusor (24) der Überdruck-Klimaanlage angeordnet sind und daß der Druckgeber (25) mit einem Schalter (31) verbunden ist, der die verschiedenen Leistungsstufen der Turbo-Ventilatorgruppe (19) steuert.

5. Überdruck-Klimaanlage nach Anspruch 1, dadurch gekennzeichnet, daß der Giftdetektor (32) die Form einer in einem dem im Diffusor (24) der Überdruck-Klimaanlage-Vorrichtung strömenden Luftstrom ausgesetzten Kartenhalter (33) einsetzbaren Karte hat, die eine Ammoniak-Pastille (A) zum Erfassen der Anwesenheit von phosphorisierten Insektiziden, eine Chlorpastille (B) zum Erfassen der Anwesenheit von chlorierten Insektiziden und Herbiziden, eine Wasserstoffsäurepastille (C) zum Erfassen der Anwesenheit von nitrierten Herbiziden und eine Wasserstoff-pastille (D) zum Erfassen von Fungiziden enthält.

6. Überdruck-Klimaanlage nach Anspruch 1, dadurch gekennzeichnet, daß der Behälter des Luftbehandlungsblockes (12) Seitenwände in Form von konvexen Führungsflächen hat, vorzugsweise gebildet aus zwei konvergierenden Ebenen (12, 12b), die an ihrem Scheitel miteinander verbunden sind.

**Claims**

1. An air pressurizer-conditioner for cabins for working in a polluted atmosphere, in particular for the cabs of agricultural tractors, the apparatus comprising an air processor block (12) mounted and/or incorporated in or on the roof of a cabin (11), said block being equipped internally with a rough filter element (15) for eliminating solids such as grit or tree leaves, a fine filter element (16) for removing dust, and a turbo-fan assembly (19) for sucking in outside air and delivering it to the user cabin and purified form, the air processor block (12) being generally in the form of a rectangular basin having a suction opening (10a) in one of its front faces and extending over a major portion of said face to give access to the front faces of the filter elements, the filter elements being mechanically held in leak-proof manner on a sealed intermediate frame, the turbo-fan assembly (19) being disposed inside the basin downstream from the filter element so that the air sucked through the filter element and is exhausted in purified form into the user cabin via a diffuser (24), characterized in that the air processor block (12) additionally includes a cell (17) containing activated carbon for stopping harmful gases and vapors by absorption, and in that equipment is provided for monitoring the pressurization and for detecting the toxicity (32) of the air pulsed into the cabin, the equipment for monitoring pressurization and toxicity comprising: firstly a differential pressure-sensitive switch (25) having a pressure inlet (28) in the cabin and a pressure inlet (27) outside the cabin, said pressure-sensitive switch feeding a pressurization indicator (26) in the cabin; secondly a pulse counter (29) associated with a divider bridge (30) having as many ratios as the turbo-fan assembly (19) has flowrates, said counter displaying, in corrected time, the effective utilization of the activated carbon cell (17) as a function of the turbo-fan (19) flowrate; and the toxicity detector (32) further comprising a plurality of reagent pellets (A, B, C, D) on a replaceable support situated on the path of the air pulsed into the cabin, said reagent pellets indicating the presence of polluting chemical compounds above a given threshold by changing color.

2. An air pressurizer-conditioner according to claim 1, characterized firstly in that a deflector-filter (14) for separating liquid suspended in a gas is provided upstream from the air inlet suction opening (10a), said deflector delimiting, in conjunction with the front face of the rough filter element (15) a first baffle chamber (d1) for the sucked-in air, and secondly in that the activated carbon cell (17) is disposed at a certain distance from the fine filter element (16) to form a second baffle chamber (d2); and further in that the turbo-fan assembly (19) is also disposed at a certain distance from the activated carbon cell (17) in order to form a third baffle chamber (d3).

3. An air pressurizer-conditioner according to claim 1, characterized in that the activated carbon cell (17) is in the form of a removable box, said box containing a honeycombed pad (18) in which the activated carbon is enclosed, said pad being in the form of a V lying horizontally so as to have its narrow edge facing towards the fine filter element (16) and to have two diverging trailing edges directed towards the turbo-fan assembly (19).

4. An air pressurizer-conditioner according to claim 1, characterized in that the pressure indicator (26), the chemical filter (17) use counter (29), and the toxicity detector (32) are brought together inside the cabin on the diffuser (24) of the air pressurizer-conditioner, and in that the pressure-sensitive switch (25) is coupled to a selector (31) for selecting different turbo-fan assembly flowrates.

5. An air pressurizer-conditioner according to claim 1, characterized in that the toxicity detector (32) is in the form of a card which can be slotted into a card holder (33) exposed to the airflow through the diffuser (24) of the air pressurizer-conditioner apparatus, said card preferably comprising an ammonia pellet (A) for detecting the presence of phosphorous-containing insecticide, a chlorine pellet (B) detecting the presence of chlorinated insecticides and herbicides, a hydracid pellet (C) detecting the presence of nitrogen-containing herbicides, and a hydrogen pellet (D) detecting the presence of fungicides.

6. An air pressurizer-conditioner according to claim 1, characterized in that the air processor block basin has side walls in the form of a convex deflector, preferably formed from two converging planes (12a, 12b) interconnected along the top by a ridge.

9

**FIG : 1**

0 092 448

FIG: 2

FIG : 4

FIG : 3

FIG : 5